# EUROPEAN PATENT APPLICATION

(11) **EP 4 806 830 A1**
(43) Date of publication of application: **16.09.2026**
(21) Application number: 26162242.7
(22) Date of filing: 04.03.2026
(51) Int. Cl.: B66F 3/08, B66F 3/46, E01D 19/04

(54) **LEVELING DEVICE WITH LOAD CONTROL**

(30) Priority: 13.03.2025 IT 202500005110
(71) Applicant: A.T.P. S.p.A., 41122 Modena (IT)
(72) Inventor: SASSI, Alessandro, I- 41122 Modena (MO) (IT)
(74) Representative: Long, Giorgio

(57) **Abstract**

The present invention refers to a heavy-duty levelling device, of a type used for example in shipyards.

In particular, the invention concerns a heavy-duty support device (1) comprising a first and a second wedge support element (2, 3), a first and a second wedge regulating element (4, 5), and an organ regulating (6) the reciprocal distance between these first and second regulating wedge elements (4, 5), **characterized by the fact that** the support device (1) includes a sensor device for determining the load applied to the upper face (2a) of the support wedge element (2).

## Description

### Technical field of invention

The present invention refers to a heavy-duty levelling device, of a type used for example in shipyards.

### State of the art

A problem felt in the manufacture of objects of high size and weight is that of keeping the object under construction on a substantially horizontal plane, so as to avoid its imbalance with serious consequences for men, vehicles and installations. A typical example is shipbuilding in shipyards.

For this purpose, adjustable supports, known as levelers, are used, which are placed between the ground and the object to be supported, typically but not exclusively the hull of a ship, and which, depending on the size and weight of the body to be supported, can also be used in large numbers, for example hundreds or even thousands.

The leveller is an element capable of supporting loads and, by means of an adjustment screw, varying the height of the same at will to keep the weight at a desired height. The structure of the leveller allows it to work both individually and in combination with other levelers in order, if necessary, to distribute the load and distribute it among the various elements.

However, the current state of the art does not provide for a system for evaluating the real load applied to the individual leveler. The user evaluates the load applied to the individual leveller by estimating the weight of the total load and its distribution among the various levellers adopted. To date, it is just possible to assess the torque required for nut tightening once the load has been applied.

### Summary of the invention

The subject of this invention is a heavy-duty support device, also known as a leveller, as outlined in the attached claims, the definitions of which form an integral part of this description for the purpose of sufficient description.

A further object is a system comprising a plurality of levellers and a command and control unit for the management of these levellers.

The objects of this description and of the figures are therefore:
(1) a heavy-duty support device comprising a first and a second wedge support element, a first and a second adjusting wedge element, and a member for adjusting the reciprocal distance between said first and second adjusting wedge elements, in which the first wedge support element comprises an upper face, configured for the support of the heavy load, and two converging oblique faces, and in which the second support wedge element includes a lower face, configured for the support device to rest on a fixed surface, and two converging oblique faces, the first and the second support wedge element being arranged in such a way that the respective oblique faces are facing; and in which the first and second adjusting wedge elements comprise, respectively, a lateral face, an upper oblique face and a lower oblique face, in which the upper and lower oblique faces are converging and in which the adjusting wedge elements are arranged in such a way that their respective oblique faces are facing; and where the upper oblique faces act, respectively, on the oblique faces of the first supporting wedge element and the lower oblique faces act, respectively, on the oblique faces of the second supporting wedge element, where the support device includes a sensor device for determining the load applied to the upper face of the supporting wedge member;
(2) a support device as in point 1, where the adjusting member comprises a longitudinal body, terminating at both ends with a first and a second threaded portion, and stricker elements placed on that first and second threaded portion, respectively, the adjusting member being inserted into a through hole on the side faces of the adjusting wedge elements, in such a way that the threaded portions and their respective stricker elements emerge outside the adjusting wedge elements;
(3) a support device as in point 1, where the adjusting member comprises a single screw comprising a threaded portion and a locking end, the threaded portion being coupled to a nut, the adjusting member being inserted into a through hole on the side faces of the adjusting wedge elements, in such a way that the locking end and the threaded portion emerge outside the adjusting wedge elements;
(4) a support device as at any of the points 2 or 3, where the side faces of the adjusting wedge elements include reinforcing plates;
(5) a support device as in any of points 2 to 4, where that sensor device is operationally associated with that adjusting member;
(6) a support device as in any of the points 2, 4 or 5, where the sensor device is integrated into a stricker element associated with the first threaded portion of the adjusting member;
(7) a support device as in any of the points 2 to 5, where the sensor device consists of a ring force transducer, placed between a nut and a side face of at least one of the adjusting wedge elements or its reinforcement plate;
(8) a support device as in any of the points 2, 4 or 5, where the sensor device is placed at both threaded portions, either by means of a stricker element in which the sensor device is integrated, or by coupling the nuts with a ring force transducer;
(9) a support device as in point 5, in which the adjusting member includes a sensor device consisting of a force gauge, arranged axially and emerging from one end of the longitudinal body;
(10) a support device as in point 5, where the adjusting member includes externally, in a substantially central position, a sensor device consisting of one or more strain gauges or strain gauge rosettes;
(11) a support device as in any of the points 1 to 4, where one or more force sensors are associated with the bottom face of the second support wedge member or the top face of the first support wedge member;
(12) a support device as in any of points 1 to 4, where the lower face of the second supporting wedge member or the upper face of the first supporting wedge member comprises a recess with a semicircular cross-section, in which a hinge element complementary to that of the recess is housed, the hinge element including a distancing element that provides for the distance of the hinge element from the support surface or from the load to be supported, respectively, and in which, in an opposite position to the hinge element, at least one force sensor is placed;
(13) a support device as at any of points 1 to 4, where a weight gauge is placed between the lower face of the second supporting wedge member and the support surface, or between the upper face of the first supporting wedge element and the load to be supported;
(14) a system for controlling and managing the distribution of a heavy load including:
   - a plurality of support devices as in any of the points 1 to 13, and

   - a command and control unit configured to receive load data from each of those support devices and provide a user with information on the distribution of said load on those support devices and the static positioning of that load;
(15) a system as in point 14, where each of the support devices is connected to the command and control unit by cabling directly or by exploiting telecommunication services with a remote command and control unit, e.g. connection/telecommunication services made available via the web, including through distributed remote processing through cloud technologies;
(16) a system as in point 14, in which the connection between the support devices and the command and control unit is made by wireless systems, or mixed systems that provide for a connection by wiring with a transmitter and a wireless connection with a receiver connected via web or cloud to a remote command and control unit.

Further characteristics and advantages of the present invention will be further shown by the description of some examples of realization, made below by way of example and not exhaustively, with reference to the following figures.

### Brief description of the figures

Figure 1A shows a perspective view of a leveller according to a first embodiment;
Figure 1B shows a side view of the leveler of Figure 1A;
Figure 1C shows a perspective view of a detail of the leveler in figure 1A;
Figure 1D shows a perspective view of the detail of figure 1C according to a different embodiment;
Figures 2A and 2B show a side view of two variants of the leveler in Figure 1A;
Figure 3A shows a side view of a different embodiment of the leveler of the invention;
Figure 3B shows a view according to section III-III of the leveler of figure 3A;
Figures 4A, 4B, 4C and 4D show a diagram of a system of connection and control of the levellers of the invention according to four different embodiments;
Figure 5A shows a side view of yet another different embodiment of the leveler of the invention;
Figure 5B shows a view according to the V-V section of the leveler of figure 5A;
Figure 6 shows a view of the adjusting member according to particular embodiments;
Figure 7A shows a transparent perspective view of a further embodiment of the leveler of the invention;
Figure 7B shows a side view of the leveler of Figure 7A;
Figure 8 shows a transparent perspective view of a further embodiment of the leveler of the invention;
Figure 9 shows a perspective view of a further embodiment of the leveler of the invention in partial transparency;
Figure 10 shows a perspective view of a variant of the leveler of figure 9 in partial transparency;
Figure 11 shows a perspective view of an additional embodiment of the invention leveler.

### Detailed description of the invention

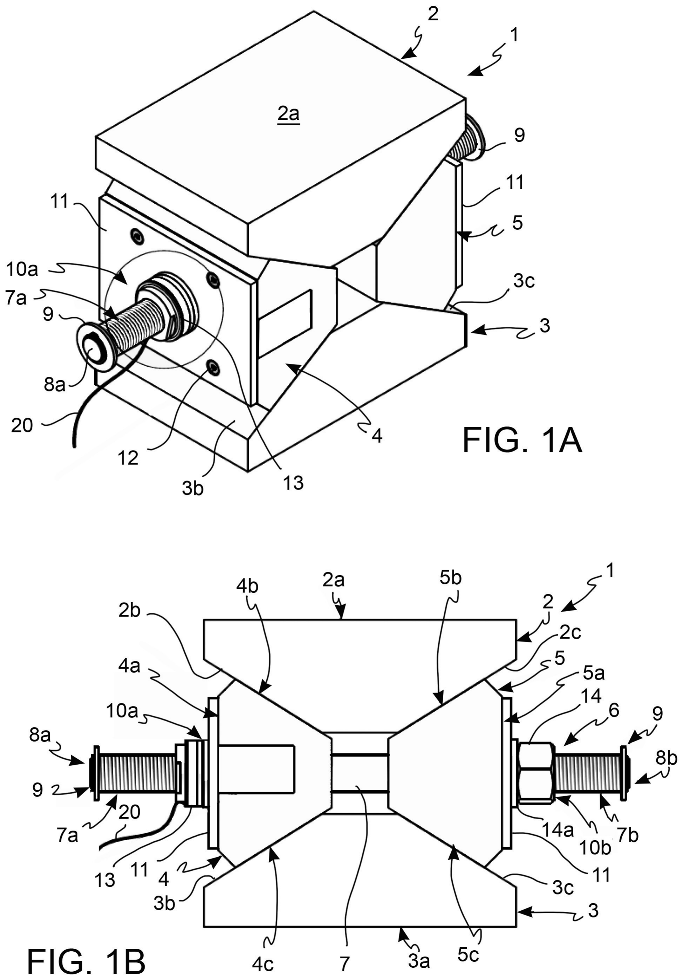

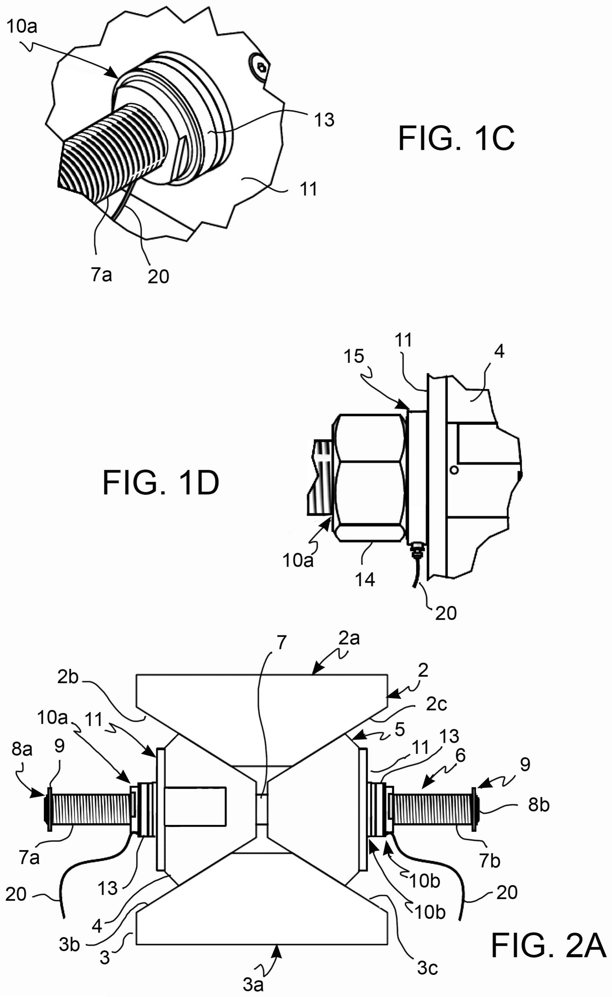

For the purposes of the present invention, terms such as "downward" or "upward" or "upper" or "lower" shall be understood by reference to Figure 1, which represents a normal position of use.

With reference to the figures, the heavy-duty support device, which is the subject of the present invention, also known as a leveller, referred to as a whole by number 1, comprises a first and second wedge support element 2, 3, a first and a second adjusting wedge element 4, 5 and a member for adjusting the reciprocal distance between these first and second adjusting wedge element 4, 5.

The first support wedge element 2 includes an upper face 2a, intended for supporting the heavy load, and two converging oblique faces 2b, 2c. Similarly, the second supporting wedge element 3 includes a lower face 3a, intended for the support of leveller 1 on a fixed surface (e.g., the floor of a construction site), and two converging oblique faces 3b, 3c. The first and second support wedge elements 2, 3 are arranged in leveler 1 in such a way that the respective oblique faces 2b, 2c, 3b, 3c are facing each other. In other words, the two supporting wedge elements 2, 3 are placed in an inverted position.

The upper face 2a can be flat or have different shapes, for example V-shaped, or concave.

The first and second adjustment wedge elements 4, 5 comprise, respectively, a lateral face 4a, 5a, an upper oblique face 4b, 5b and a lower oblique face 4c, 5c, in which the upper oblique faces 4b, 5b and lower 4c, 5c are convergent and in which the adjustment wedge elements 4, 5 are arranged in leveller 1 in such a way that the respective oblique faces 4b, 4c, 5b, 5c are facing each other and in which, in leveller 1, the upper oblique faces 4b, 5b act, respectively, on the oblique faces 2b, 2c of the first supporting wedge element 2 and the lower oblique faces 4c, 5c act, respectively, on the oblique faces 3b, 3c of the second supporting wedge element 3.

The adjusting member 6, also known as the tie rod, includes a longitudinal body 7, ending at both ends with a first 7a and a second threaded portion 7b, and stricker elements 10a, 10b placed, respectively, on said first and second threaded portions 7a, 7b. The adjusting member 6 is inserted into a through-hole on the side faces 4a, 5a of the adjusting wedge elements 4, 5, in such a way that the threaded portions 7a, 7b and the corresponding stricker elements 10a, 10b emerge outside the adjusting wedge elements 4, 5.

By screwing the stricker elements 10a, 10b, the adjusting wedge elements 4 and 5 are brought closer together, so that the first supporting wedge element 2 is lifted by sliding the inclined planes. This allows the height of the leveler 1 to be adjusted and therefore of the load it supports.

At ends 8a, 8b of the adjusting member 6 there are retaining rings 9 to prevent the adjusting member 6 from slipping out of the adjusting wedge elements 4, 5.

Taking into account that the wedge support elements 2, 3 and adjusting elements 4, 5 are preferably made of rigid plastic material in order to limit weight and friction, the side faces 4a, 5a of the adjusting wedge elements 4, 5 on which the stricker elements 10a, 10b act may include reinforcement plates 11, which can be attached to the adjusting wedge elements 4, 5 by means of screws 12.

The leveler 1 according to the invention is characterized by the fact that it includes a sensor device for determining the load applied to the upper face 2a of the supporting wedge element 2.

In the embodiment of figures 1A, 1B and 1C, the sensor device 13 is integrated into a stricker element 10a associated with a first threaded portion 7a of the adjusting member 6, while the stricker element 10b associated with the opposite threaded portion 7b consists of a conventional nut 14 with the corresponding washer 14a.

In the version of figure 1D, on the other hand, the sensor device consists of a force sensor, also called ring force transducer 15, arranged between a nut 14 and the reinforcement plate 11.

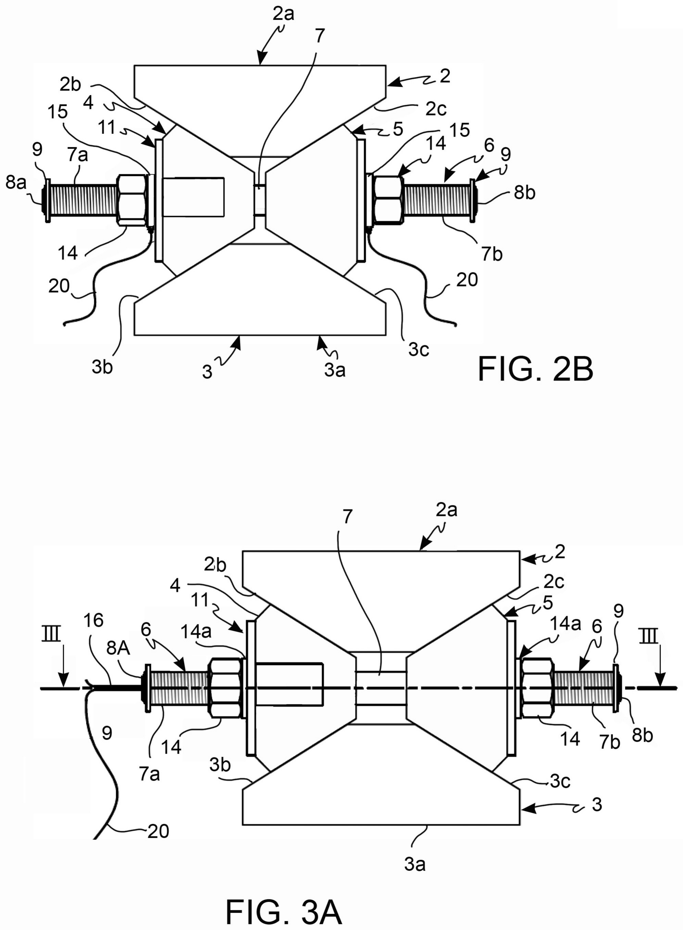

As shown in Figures 2A and 2B, it will also be possible to attach the sensor device at both threaded portions 7a, 7b, either by replacing both nuts with a stricker element 10a, 10b in which the sensor device 13 is integrated (figure 2A), or by coupling both nuts 14 with a ring force transducer 15 (figure 2B). This solution, which provides for a double reading at different points, makes the system redundant and safeguards against possible malfunctioning problems, with improved safety of use.

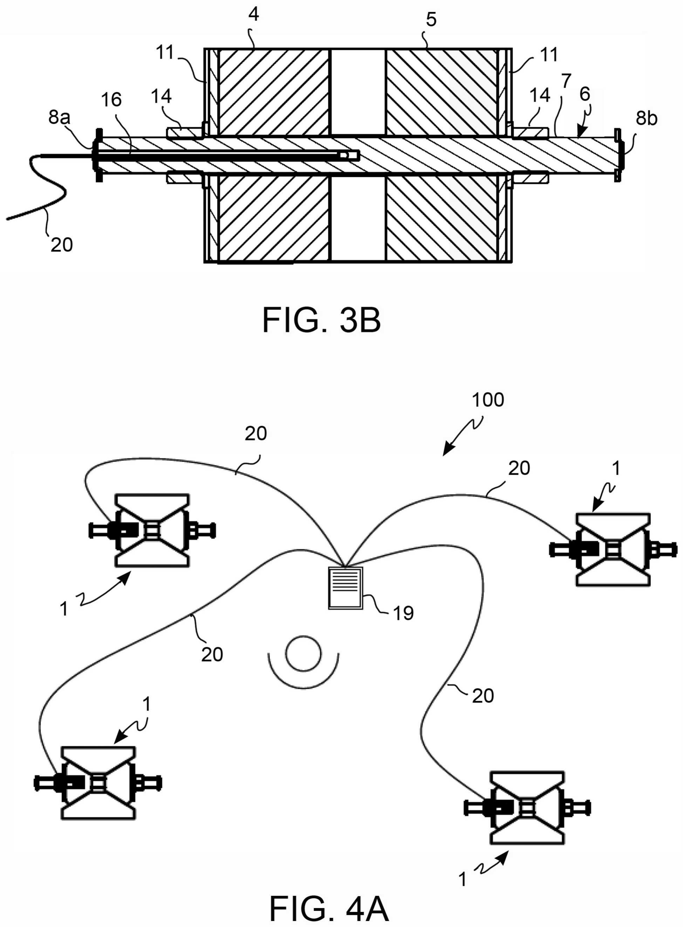

In a different embodiment shown in figures 3A and 3B, the adjusting member 6 is coupled, as in the known art, to two nuts 14, but includes a sensor device consisting of a force meter 16, e.g. a strain gauge, arranged axially and emerging from one end 8a of the longitudinal body 7.

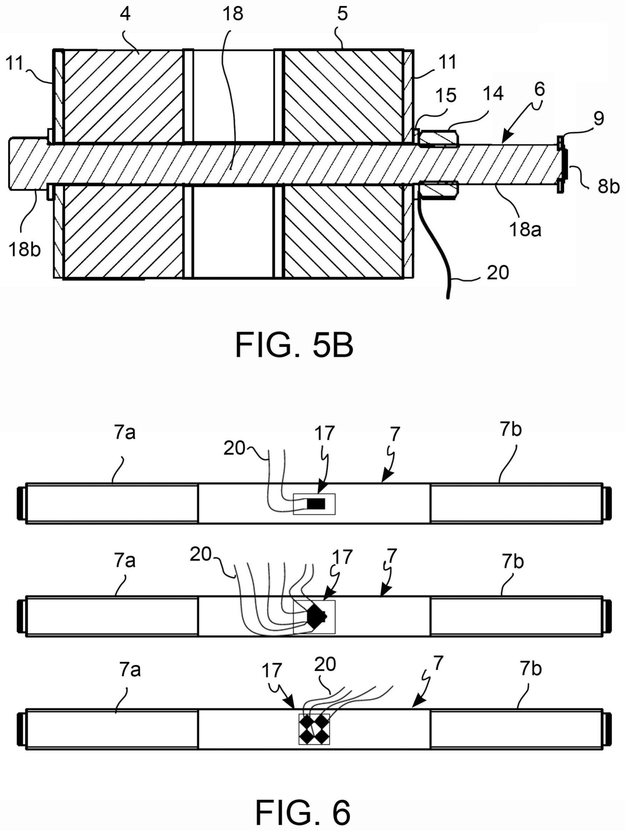

Similarly, as shown in figure 6, the longitudinal body 7 may include externally, in a substantially central position, a sensor device consisting of one or more strain gauges or strain gauge rosettes 17.

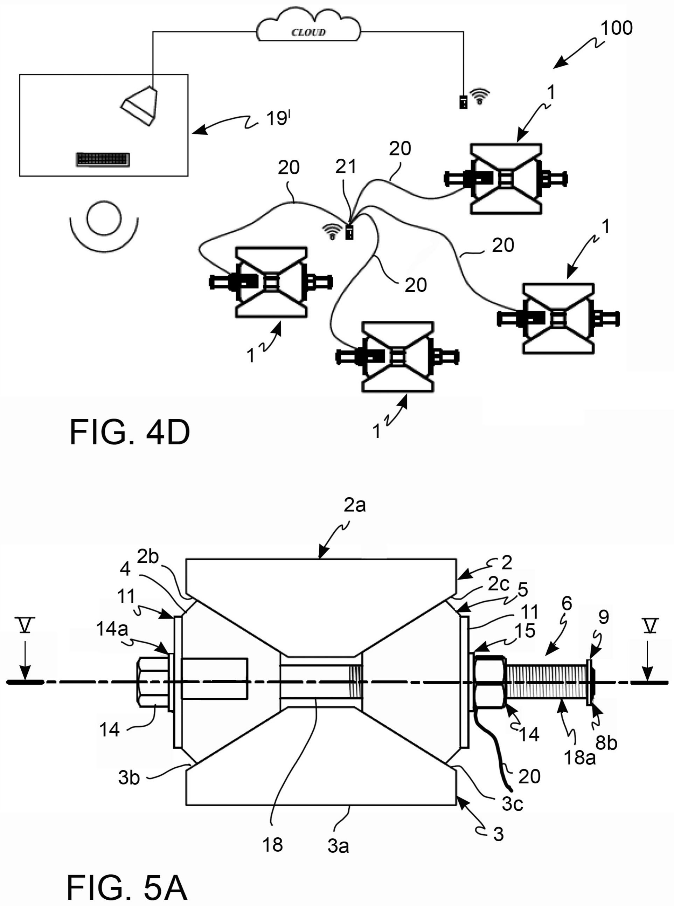

In yet another different embodiment, shown in figures 5A and 5B, the adjusting member 6 comprises a single screw 18 comprising a threaded portion 18a and a locking end 18b, the threaded portion 18a being coupled to a nut and in which a ring force transducer type sensor device 15 is placed between the nut 14 and the reinforcement plate 11.

In all cases, thanks to the geometry of leveler 1, the tensile force that will be determined by the sensor device will be directly proportional to the load applied on the upper face 2a of leveler 1. It will then be possible to convert, in a known way, the measurement reading of the sensor device into the real load applied on the leveler.

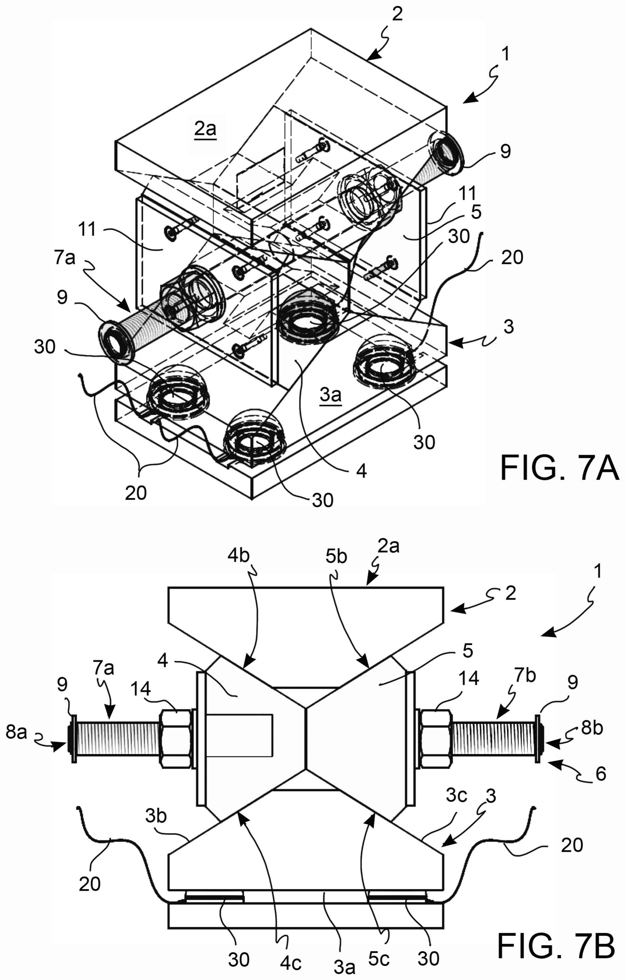

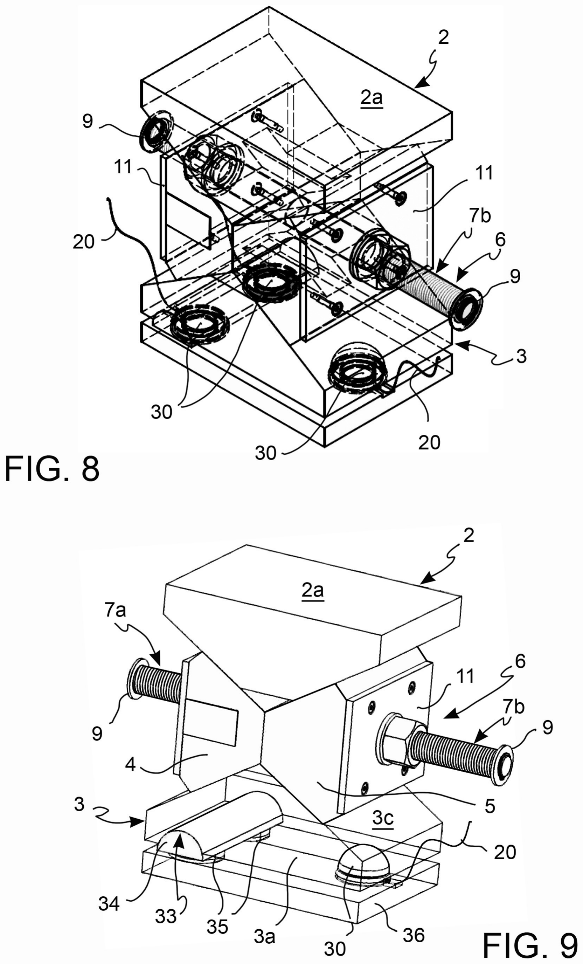

In another embodiment, shown in Figures 7A-7B and 8, one or more force sensors, such as load cells 30, are associated with the bottom face 3a of the second supporting wedge element 3. The version of Figures 7A-7B includes four sensors 30, while the version of Figure 8 includes three sensors 30.

In a different embodiment, shown in figure 9, the lower face 3a of the second wedge support element 3 includes a recess 33 with a semicircular section, which can run parallel to an entire side of element 3 or only to a portion of it, and in which a hinge element 34 can be housed having a shape complementary to that of recess 33. The hinge element 34 also includes a spacing element 35, e.g. support feet, which ensures that the hinge element 34 is distanced from the table surface.

In addition, the lower face 3a comprises a force sensor 30, e.g. a load cell, in the opposite position to the hinge element 34. In this embodiment, the beam effect is therefore used to determine the force on the sensor 30.

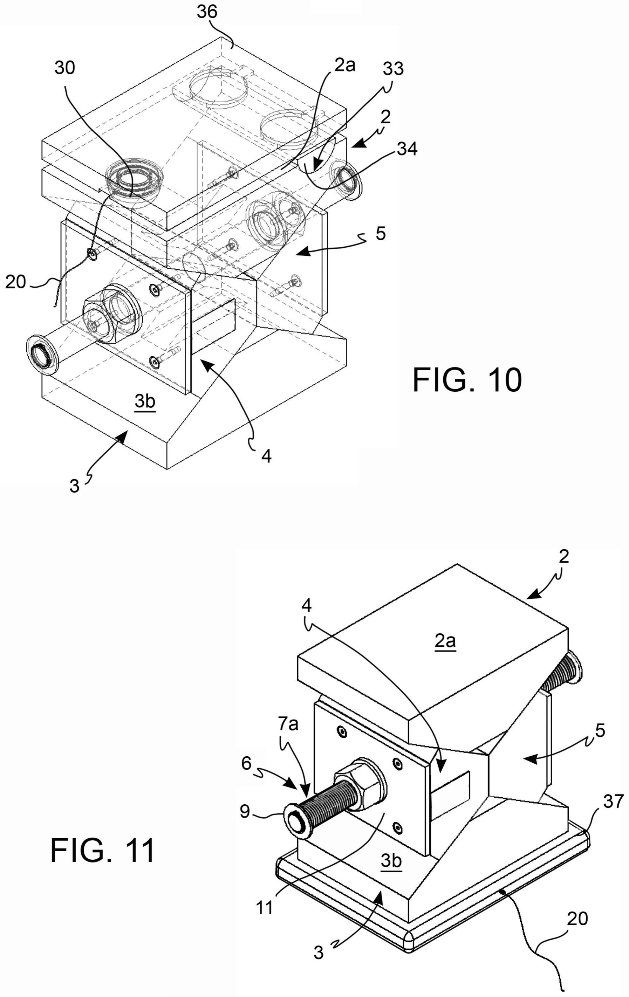

Figure 10 illustrates a variant of the embodiment in Figure 9, in which the upper face 2a of the first supporting wedge element 2 includes the semicircular recess 33 that houses a hinge element 34 and also includes, in opposite position to the hinge element 34, a force sensor 30, e.g. a load cell.

In both the variants of figure 9 and figure 10, the force sensor 30 can rest directly on the support surface or on the load to be supported, respectively. Alternatively, a support plate 36 may be placed between these surfaces.

In possible variants of these embodiments, there may be two or more sensors 30 and/or the hinge element 34 may consist of only a hemisphere.

Similarly to the variant of figure 10, the embodiment of figures 7A-7B and 8 can also include one or more force sensors 30 associated with the upper face 2a of the first support wedge element 2 instead of the second support wedge element 3.

In the embodiment shown in figure 11, on the other hand, a separate weight gauge, e.g. a truck scale, is placed between the lower face 3a of the second support wedge element 3 and the support surface. In one variant, the weight gauge 37 can be placed between the upper face 2a of the first support wedge element 2 and the load to be supported. The embodiments of figures 8 to 11 can also be applied to leveler 1 having a single screw 18 described above.

A further object of the present invention is a system 100 for the control and management of the distribution of a heavy load which includes:
- a plurality of levellers 1 as described above, and
- a command and control unit 19 configured to receive load data from each of these levellers and provide a user with information relating to the distribution of said load on said levellers 1 and the static positioning of said load.

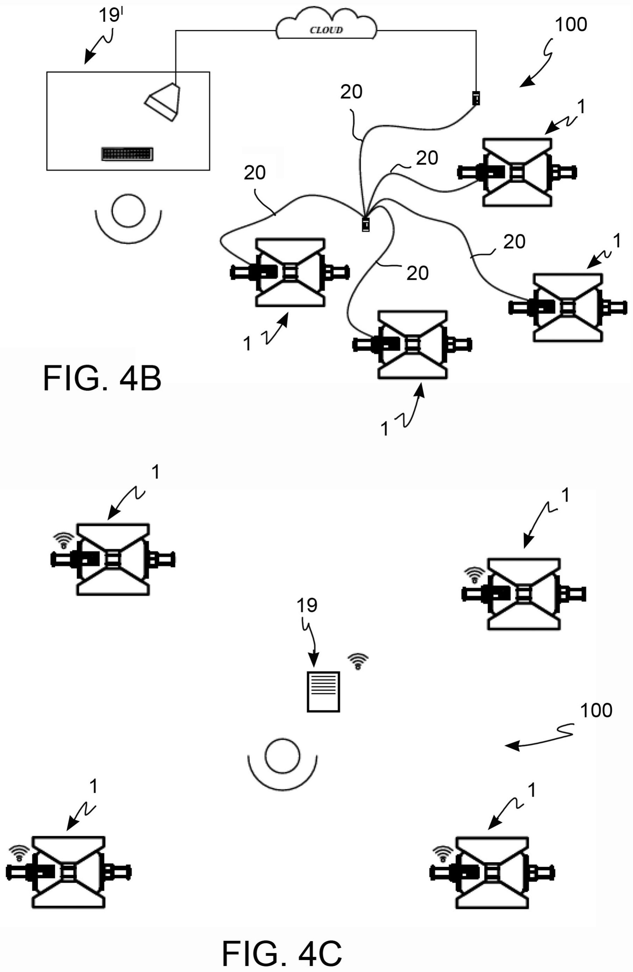

Each of the levellers 1 can be connected to the command and control unit 19 by means of appropriate wiring 20 directly (figure 4A) or by exploiting telecommunication services known in themselves with a remote command and control unit 19' (figure 4B), for example connection/telecommunication services made available via the web. This embodiment, in addition to communication with the command and control unit 19, 19', can also realize the implementation option of distributed remote processing, for example through cloud technologies.

Alternatively, as shown in figure 4C, the connection between the levellers 1 and the command and control unit 19 can be made by means of wireless systems.

In a further alternative version, shown in figure 4D, mixed systems can be used that provide for a connection via wiring 20 with a transmitter 21 and a wireless connection with a receiver 22 connected via web or cloud to a remote command and control unit 19'.

The present invention therefore makes it possible to carry out a quantitative control of the load weighing on one or more levellers 1, with a clear advantage in terms of correctness of the levelling operation and safety of the construction site.

It is evident that only a few particular embodiments of the present invention have been described, to which the skilled person will be able to make all the changes necessary for its adaptation to particular applications, without however deviating from the scope of protection of the present invention as defined by the attached claims.

## Claims

1. A support device (1) for heavy-duty comprising a first and a second wedge support element (2, 3), a first and a second adjusting wedge element (4, 5), and a adjusting member (6) of the reciprocal distance between these first and second adjusting wedge elements (4, 5), in which the first support wedge element (2) comprising an upper face (2a), configured for the support of the heavy load, and two converging oblique faces (2b, 2c), and in which the second support wedge element (3) includes a lower face (3a), configured for the support device (1) to rest on a fixed surface, and two converging oblique faces (3b, 3c), the first and second support wedge elements (2, 3) being arranged in such a way that the respective oblique faces (2b, 2c, 3b, 3c) are facing; and in which the first and second adjusting wedge elements (4, 5) comprise, respectively, a lateral face (4a, 5a), an upper oblique face (4b, 5b) and a lower oblique face (4c, 5c), in which the upper (4b, 5b) and lower (4c, 5c) oblique faces converge and in which the adjusting wedge elements (4, 5) are arranged in such a way that their respective oblique faces (4b, 4c, 5b, 5c) are facing each other; and in which the upper oblique faces (4b, 5b) act, respectively, on the oblique faces (2b, 2c) of the first support wedge element (2) and the lower oblique faces (4c, 5c) act, respectively, on the oblique faces (3b, 3c) of the second support wedge element (3), **characterized by the fact that** the support device (1) includes a sensor device for determining the load applied to the upper face (2a) of the support wedge member (2).

2. The support device (1) according to claim 1, in which the adjusting member (6) comprises a longitudinal body (7), terminating at both ends with a first (7a) and a second threaded portion (7b), and stricker elements (10a, 10b) placed, respectively, on said first and second threaded portions (7a, 7b), the adjusting member (6) being inserted into a through hole on the side faces (4a, 5a) of the adjusting wedge elements (4, 5), in such a way that the threaded portions (7a, 7b) and their corresponding stricker elements (10a, 10b) emerge outside the adjusting wedge elements (4, 5).

3. The support device (1) according to claim 1, in which the adjusting member (6) comprises a single screw (18) comprising a threaded portion (18a) and a locking end (18b), the threaded portion (18a) being coupled to a nut (14), the adjusting member (6) being inserted into a through hole on the side faces (4a, 5a) of the adjusting wedge elements (4, 5), so that the locking end (18b) and the threaded portion (18a) emerge from the outside of the adjusting wedge elements (4, 5).

4. The support device (1) according to any of claims 2 or 3, where the side faces (4a, 5a) of the adjusting wedge elements (4, 5) comprise reinforcing plates (11).

5. The support device (1) according to any of claims 2 to 4, where said sensor device is operationally associated with said adjusting member (6).

6. The support device (1) according to any one of claims 2, 4 or 5, in which the sensor device (13) is integrated into a stricker element (10a) in connection with the first threaded portion (7a) of the adjusting member (6).

7. The support device (1) according to any of claims 2 to 5, where the sensor device consists of a ring force transducer (15), placed between a nut (14) and a side face (4a, 5a) of at least one of the adjusting wedge elements (4, 5) or its reinforcement plate (11).

8. The support device (1) according to one of claims 2, 4 or 5, in which the sensor device is placed at both threaded portions (7a, 7b), either by means of a stricker element (10a, 10b) in which the sensor device (13) is integrated, or by coupling the nuts (14) with a ring force transducer (15).

9. The support device (1) according to claim 5, in which the adjusting member (6) comprises within it a sensor device consisting of a force gauge (16), arranged axially and emerging from one end (8a) of the longitudinal body (7).

10. The support device (1) according to claim 5, in which the adjusting member (6) externally comprises, in a substantially central position, a sensor device consisting of one or more strain gauge gauges or strain gauge rosettes (17).

11. The support device (1) according to any one of claims 1 to 4, where one or more force sensors (30) are associated with the bottom face (3a) of the second support wedge member (3) or the top face (2a) of the first support wedge member (2).

12. The support device (1) according to any one of claims 1 to 4, where the lower face (3a) of the second support wedge element (3) or the upper face (2a) of the first support wedge element (2) comprises a recess (33) with a semicircular cross-section, in which a hinge element (34) with a shape complementary to that of the recess (33) is accommodated, the hinge element (34) including a spacing element (35) which provides for the distance of the hinge element (34) from the support surface or from the load to be supported, respectively, and in which, in a position opposite to the hinge element (34), at least one force sensor (30) is placed.

13. The support device (1) according to any of claims 1 to 4, in which a weight gauge (37) is placed between the lower face (3a) of the second support wedge element (3) and the support surface, or between the upper face (2a) of the first support wedge element (2) and the load to be supported.

14. A system (100) for the control and management of the distribution of a heavy load including:
- a plurality of support devices (1) according to any of the claims 1 to 13, and
- a command and control unit (19) configured to receive load data from each of those support devices (1) and provide a user with information on the distribution of that load on those support devices (1) and the static positioning of that load.

15. The system (100) according to claim 14, in which each of the support devices (1) is connected to the command and control unit (19) by cabling (20) directly or by using telecommunications services with a remote command and control unit (19'), e.g. connection/telecommunication services made available via the web, including via distributed remote processing via cloud technologies.

16. The system (100) according to claim 14, in which the connection between the support devices (1) and the command and control unit (19) is made by wireless systems, or mixed systems that provide for a connection by wiring (20) with a transmitter (21) and a wireless connection with a receiver (22) connected via web or cloud to a remote command and control unit (19').
